# EUROPEAN PATENT SPECIFICATION

(11) **EP 3 647 886 B1**
(45) Date of publication and mention of the grant of the patent: **07.08.2024**
(21) Application number: 18825126.8
(22) Date of filing: 29.01.2018
(51) Int. Cl.: E05F 15/78, G01S 17/02, E06B 3/90, G01S 17/42, G01S 17/88, G01S 7/48

(54) **HUMAN BODY SAFETY PROTECTION LASER SENSOR FOR REVOLVING DOOR**
LASERSENSOR ZUM SICHERHEITSSCHUTZ DES MENSCHLICHEN KÖRPERS FÜR EINE DREHTÜR
CAPTEUR LASER DE PROTECTION DE SÉCURITÉ CORPORELLE HUMAINE DE PORTE TOURNANTE

(30) Priority: 28.06.2017 CN 201710506426
(43) Date of publication of application: 06.05.2020
(73) Proprietor: B.E.A. Electronics (Beijing) Co., Ltd., Beijing 100176 (CN)
(72) Inventor: SU, Dan, Beijing 100176 (CN); LIU, Jixiang, Beijing 100176 (CN); XU, Yuhe, Beijing 100176 (CN)
(74) Representative: Meindl, Tassilo
(86) International application number: PCT/CN2018/074433
(87) International publication number: WO 2019/000937

(56) References cited:
- EP-A1- 1 619 469
- WO-A2-2011/054521
- CN-A- 107 367 961
- CN-U- 202 117 511
- CN-U- 203 879 350
- CN-U- 203 879 350
- CN-U- 204 002 381
- JP-A- 2000 054 728
- JP-A- 2000 170 445

## Description

### Technical Field

The present invention relates to the technical field of automatic door sensors, in particular to a laser sensor for human body safety protection for use in a revolving door.

### Background of the Invention

A revolving door is a kind of venue door that combines advantages of various doors, and its spacious and high-style design creates a luxurious atmosphere, which is the crowning touch to buildings. Besides, the revolving door can enhance wind resistance and reduce energy consumption of air conditioners, which is the best choice for isolating airflows and saving energy.

Existing revolving doors usually include automatic revolving doors and passive revolving doors, wherein the passive revolving door does not have any driving device and sensing device, and it revolves by the push of people, so its safety, practicability and using experience are not as good as those of the automatic revolving door. The automatic revolving door revolves by the driving device installed thereon and requires no push to the door leaf by people. In addition, the existing automatic revolving door usually has more than two sets of sensing device installed thereon, wherein one set of sensing device is used for detecting whether there is any person that needs to come in or out of the revolving door and controlling the revolving door to automatically start revolving according to the result of detection so as to make it convenient for people to come in and out; the other set of sensing device is mainly a safety protection sensor, which mainly functions to prevent the revolving door leaf from hitting or squashing human body.

There are mainly the following types of safety protection sensors at present:

### I. Contact pressure deformation sensor

Said sensor is usually a rubber bar with a pressure sensing device installed therein. When a human body is hit or squashed by a revolving door, a pressure from the contact between the door leaf or door frame and the human body is passed to the pressure sensing device through the rubber bar, and the pressure sensing device identifies the hitting signal and sends a control signal to the driving device of the revolving door to temporarily stop the revolving door, so as to achieve the purpose of protecting human body safety.

The advantage of said type of sensor lies in the complete protection area, because the rubber area of the entire bar implements protection. However, said sensor only functions when the door leaf has hit or squashed the human body, thus having adverse effect for the user's experience. Moreover, when the strength of hitting or squashing reaches a certain degree, harm will be caused to the user's body, especially for children or elder people.

### II. Infrared trigonometric diffuse reflection optical safety protection sensor

Said sensor employs the technology of infrared optics to realize non-contact protection at key positions of the revolving door. Said sensor is usually installed at key positions having potential safety hazards on the revolving door, and when the human body is in the key position for protection, the infrared optical sensor will detect this and stop the operation of the door machine, thereby realizing non-contact protection for the human body.

Disadvantages of said sensor are as follows: 1. In the sensors of infrared optical product, the infrared light beam has a wide divergence angle, and the light spot on the ground formed by the light beam can have a diameter of over 2 centimeters, so the size of the detectable object is limited to be at least more than 2 centimeters; 2. As compared to the contact pressure deformation sensor, the infrared optical sensor has an incomplete protection area. The areas outside of the light beam and the areas between light beams cannot be protected; 3. The maximum installation height of the existing infrared trigonometric diffuse reflection optical safety protection sensor for use in revolving doors normally is only 4 meters.

### III. Infrared optical safety protection sensor with trigonometric ranging on door leafs

Since the infrared light beam has a relatively wide divergence angle, and the light beam diameter is about several centimeters. In order to realize protection for door leafs, said sensor uses multiple infrared light beams combined together so as to realize rough protection for the entire door leaf. The light beams usually have an interval of tens of centimeters.

Disadvantages of said sensor are as follows: 1. said technique uses a combination of a plurality of infrared light beams, with light beams of different infrared light sources having an interval of tens of centimeters, so that the areas outside of the light beams cannot be protected. If human body is just in an area outside of the light beams, the sensor cannot effect its protection appropriately; 2. in order to avoid mistaken interference caused by changes of the ground emissivity during moving of the sensor with the door leaf, the infrared optical sensor installed on the door leaf adopts trigonometric ranging. However, due to the resolution of the optical chip, the sensor at present can hardly effectively detect any object which is less than 20 centimeters in height from the ground, that is. the ankle of the human body cannot get any safety protection; 3. said type sensor existing for use in the revolving door has a fixed detecting area, and the detection area needs to be smaller than the inner diameter of the revolving door, otherwise, the light beam will detect the inner diameter of the revolving door and cause the sensor to trigger a detection, thereby resulting in the door machine being unable to work normally. However, since the protection area of the sensor is smaller than the inner diameter, at the positions of entrance and exit, the outermost edge of the door leaf cannot be effectively detected, and hitting and squashing for human body may trend to occur; 4. the existing infrared optical product on the revolving door has a limited maximum installation height, which is usually only up 4 meters.

In addition to the above-mentioned sensors, a safety protection system can also be formed on the revolving door using the above-mentioned sensors or other sensors at the door leaf in combination with laser sensors. Wherein, the laser sensors adopted in the prior art include single point beam laser sensors or light screen type laser sensors. However, whether the single point beam laser sensors or the light screen type laser sensors is to be used, they can only be installed on the door frame of the revolving door for generally monitoring the entrance and exit positions of the door frame of the revolving door, and both of them need to correspondingly arrange a group of or groups of optical signal transmitter and optical signal receiver. For example, if an optical transmitter is arranged on a left door frame post at the entrance and exit positions of the door frame of the revolving door, then an optical receiver needs to be arranged on a right door frame post at the entrance and exit positions of the door frame of the revolving door. The existing laser sensors generally determine whether there is an intruder in the monitored area by sensing whether optical signal masking occurs. However, since the sensor can only be installed on the door frame of the revolving door, it can only detect whether there is an intruder at the entrance position, rather than detecting whether there is an intruder at the gap between the door leaf and the door frame post. If positions at the gap between the door leaf and the door frame post need to be detected, the sensor needs to be arranged behind the door frame post. At this point, it is required that the sensor should be very small and thin, so that the technological requirements for the sensor will be very high. Moreover, the sensor trends to be easily touched or hit by the door leaf, resulting in damage for the sensor. Therefore, the existing laser sensors can hardly provide a full protection.

Accordingly, the present application relates to a laser sensor according to the preamble of Claim 1, which is known, e.g., from document EP 1 619 469 A1. Documents CN 203 879 350 U and JP 2000 17445 A may also be of interest for the present invention.

### Summary of the Invention

The invention is set out in the appended set of claims.

As will be described in greater details in the following, to address at least one of the following problems: the existing contact pressure deformation sensor may cause damage to the user's body, infrared optical safety protection sensor cannot provide full protection, and laser sensor can only be installed on the door frame and can hardly provide full protection, the present invention provides a laser sensor for human body safety protection for use in a revolving door, which comprises: a laser scan range calculation section and an application analysis section. The laser scan range calculation section comprises a laser emitting device, a laser deflecting device, an optical signal receiving device, and an analyzing and processing device. Wherein, the laser emitting device emits laser signals to the laser deflecting device. The laser deflecting device deflects the laser signals by a pre-set angle under the control of the analyzing and processing device and forms at least one laser scan area. The optical signal receiving device is used for receiving returned laser signals and transmitting said signals to the analyzing and processing device.

Further, the analyzing and processing device comprises a trigger point distance analyzing module, which makes analysis to obtain trigger point distance information according to signals sent from the optical signal receiving device and sends said distance information to a safety analysis module.

Further, the trigger point distance analyzing module first measures a time difference t between laser signal transmission and reception on the basis of TOF technology (i.e. time of flight calculation technology), and then it multiplies said time difference t by the speed of light to obtain the information of distance between the trigger point and the sensor.

Further, the trigger point distance analyzing module first calculates a time difference between transmission of the laser pulse and reception of the returned signal by means of a delay time converter (TDC, time to digital converter), then calculates a distance of fight (TOF, time of flight) of the light pulse, i.e. information of a distance between the trigger point and the sensor, according to said time difference and the speed of light by means of a calculator.

Further, the analyzing and processing device comprises a laser deflection control module, which controls movement of the laser defecting device based on pre-set information, so that the laser deflecting device can deflect laser signals to a pre-set direction and angle.

Further, the laser deflecting device can deflect the laser light to rotate a certain angle along a pre-set direction to form the laser scan area.

Further, the laser deflecting device comprises a polygon mirror and a driving device for driving the polygon mirror to rotate. A mirror surface of the polygon mirror faces the laser emitting device.

Alternatively, the laser deflecting device comprises a polygon mirror and a corresponding driving device, one mirror surface of said polygon mirror facing the laser deflecting device, and another mirror surface thereof facing the optical signal receiving device.

Alternatively, the laser deflecting device comprises a first laser deflector and a second laser deflector. Said first laser deflector and second laser deflector are polygon mirrors whose numbers of mirror surfaces correspond to each other.

Further, said first laser deflector and second laser deflector can be fixed on a same rotation shaft and are driven to rotate by one driving device. They can also be fixed on different rotation shafts and be driven to rotate by different driving devices, respectively.

Further, said laser deflecting device comprises: an optical feedback calibration module for calibrating feedback optical signals.

Further, said analyzing and processing device comprises a distance precision calibrating module, which calibrates a result of trigger point distance analysis from the trigger point distance analyzing module after obtaining the deflection control information of the laser deflection control module and the calibration information of the optical feedback calibration module.

Further, said analyzing and processing device sends the calibrated trigger point distance information to the application analysis section.

Preferably, a rotation angle of the laser signals is smaller than or equal to 180°.

Preferably, the rotation angle of the laser signals is smaller than or equal to 160°.

Preferably, the rotation angle of the laser signals is smaller than or equal to 150°.

Preferably, the rotation angle of the laser signals is smaller than or equal to 140°.

Further, the laser scan area is at a side of the door leaf and is at a distance from the door leaf.

Preferably, a distance between the laser scan area and the door leaf is smaller than or equal to 50cm.

Preferably, the distance between the laser scan area and the door leaf is smaller than or equal to 30cm.

Preferably, the distance between the laser scan area and the door leaf is smaller than or equal to 20cm.

Preferably, the distance between the laser scan area and the door leaf is smaller than or equal to 10cm.

Further, the laser scan area is at a side of the door leaf and forms an angle with the door leaf.

Further, a first angle is formed between the laser scan area and the door leaf along a perpendicular direction.

Further, the first angle is smaller than or equal to 80°.

Further, a second angle is formed between the laser scan area and the door leaf along a horizontal direction.

Further, the second angle is smaller than or equal to 80°.

Further, the laser scan area penetrates through the door leaf of the revolving door and forms an angle smaller than or equal to 80° with the door leaf.

Further, laser signals emitted by the laser emitting device are laser pulse signals.

Further, the application analysis section comprises a safety analysis module.

Further, said safety analysis module is connected to a door control device of the revolving door and controls motion state of the door leaf of the revolving door after making analysis and determination on the basis of the trigger point distance information received from the trigger point distance analyzing module. Said door control device can be a device having driving and control functions installed on the revolving door for controlling whether the door leaf of the revolving door should rotate relative to the door frame and for controlling a rotation direction and a rotation speed.

Further, the safety analysis module comprises: trigger point danger analysis, which includes: first obtaining the trigger point distance information resulted from the trigger point distance analyzing module; then comparing the trigger point distance information to information of a pre-set distance of the scan point, and when the trigger point distance is greater than or equal to the pre-set distance of the scan point, the trigger point is a safe trigger point and no control signal will be generated; when the trigger point distance is smaller than the pre-set distance of the scan point, the trigger point is a dangerous trigger point and a corresponding control signal will be generated and sent to the door control device.

Further, said pre-set distance information can be provided to the safety analysis module of the sensor by means of factory setting or performing an initialization operation on the installation site, or it can be provided to the sensor by other means such as an intelligent learning system, or the sensor can be controlled to correspondingly adjust and change the pre-set distance information.

Further, the above-mentioned initialization operation has the following procedure: first, the sensor is turned on when no user passes through the revolving door, so that it scans at a pre-set maximum scan angle, and the door leaf of the revolving door is made to rotate at a pre-set speed and in a pre-set direction; then the sensor uses the trigger point distance information received at respective scan points as the pre-set distance information.

Further, during the initialization operation, when distance information of two or more trigger points appears at the same scan point in the same scan period, the distance information of the trigger point closest to the sensor is used as the pre-set distance information. When distance information of two or more trigger points appears at the same scan point in the same scan period, it usually means that the sensor detects the glass on the door leaf or door frame of the revolving door.

Further, during the initialization operation, when distance information of two or more trigger points appears at the same scan point in the same scan period, the distance information of the trigger point farthest from the sensor is used as the pre-set distance information, and the rest of the distance information is recorded and stored, so as to be invoked at the time as needed. When distance information of two or more trigger points appears at the same scan point in the same scan period, it usually means that the sensor detects fixed decorative objects and the like placed within the revolving door.

Further, said time as needed is the time when it is recorded the information of distances, in each of the scan periods, of the scan points at which distance information of two or more trigger points appear, and for consecutive scan points thereof, scan point-distance curves having a certain change rule in the corresponding scan periods are drawn. When a certain scan point of the sensor scans a trigger signal, and the following several consecutive scan points have scanned scan point-distance curves that comply with the above-mentioned change rule, then the trigger will be considered as a safe trigger. If the following several consecutive scan points have scanned scan point-distance curves that do not comply with the above-mentioned change rule, then the trigger will be considered as a dangerous trigger.

Further, during the initialization operation, when specular reflection occurs, i.e. when there is a transition change in the scan point-distance curve, first, curvature values of the scan point-distance curves of a scan point immediately before a starting point of the transition change and a scan point immediately after an end point of the transition change are recorded as a minimum value and a maximum value, and a difference ΔX between the minimum value and the maximum value is calculated; then a number n of scan points between the minimum value and the maximum value is counted, and an average curvature increase for each scan point is calculated by Δx=ΔX/n; next, each of the scan points between the starting point and the end point of the transition change is assigned with a calculated curvature value, and said calculated curvature value kₙ=kₙ₋₁+Δx, wherein kₙ is a calculated curvature of a current scan point, kₙ₋₁ is a calculated curvature of a scan point immediately before the current scan point, and k₀=the minimum value, and kₘₐₓ=the maximum value; then the scan point immediately before the starting point of the transition change and the scan point immediately after the end point of the transition change are connected by a curve, and curvatures of said curve at respective scan points of the transition change are the calculated curvatures thereof; finally, pre-set values of distances of respective scan points during the transition change are assigned according to the drawn scan point-distance curve.

Alternatively, during initialization operation, when specular reflection occurs, i.e. when there is a transition change in the scan point-distance curve, the sensor sends a stop instruction to the door control system and sends a sound, signal or prompt light to the user to prompt the user to shield the positions where specular reflection occurs with non-mirror thin substance such as paper or ground films, and continues the initialization operation.

Further, the application analysis section comprises a scan area range adjusting module.

Further, the scan area range adjusting module adjusts a maximum angle at which the laser light rotates along a pre-set direction by sending a rotation control instruction to the laser deflecting device, thereby controlling the scan range of the laser scan area.

Further, the scan area range adjusting module comprises scan area control analysis, which includes the following steps:
S1. determining a working area.
S2. Forming an extension area.
S3. Adjusting the laser scan area range based on the area information obtained from steps S1 and S2.

Further, the approach of determining a working area in step S1 comprises: forming the working area according to a pre-set value. The pre-set value can be set when the sensor leaves the factory, or it can be set according to the initialization operation during installation of the sensor.

Further, said pre-set value is set as follows: according to an orientation of a pre-set scan area of the sensor, drawing a vertical line by taking the sensor as a base point, and dividing the pre-set scan area into two parts by using said vertical line as a border. A side which is pre-set to be facing the door leaf rotation shaft is defined as the working area.

Alternatively, the working area is formed by the following steps:
(1) performing laser scan within the maximum scan area range of the sensor to form the pre-set scan area and to obtain a ground frame location;
(2) on the basis of the obtained ground frame location information, dividing the pre-set scan area into two parts by using a line between the sensor and the ground frame as a base line, wherein a side from the base line and facing the door leaf rotation shaft is the working area.

Further, the approach of obtaining the ground frame location is that: first determining whether 2 or more distance values appear at the same scan point, if yes, further selecting the scan point near an inflection point of the scan point-distance curve and relatively closer to the sensor as ground frame area information, and if no, according to pre-setting, drawing a vertical line by taking the position of the sensor as the base point to divide the pre-set scan area into two parts, selecting the scan point-distance curve of the scan area that is pre-set to be facing the door frame, and taking an inflection point thereon closest to the vertical line as a starting point to extend towards the side of the curve whose distance is gradually decreasing, and selecting m scan points as the ground frame area information, said m scan points being selected according to a pre-set value; then selecting one scan point from the ground frame area information as the ground frame location.

Preferably, when selecting the ground frame area information, the scan point corresponding to the minimum distance value or the scan point corresponding to the intermediate distance value is used as the ground frame locations.

Alternatively, the approach of obtaining the ground frame location is that: using a trigger for occurrence of non-continuous changes of the distance or transition changes within the pre-set scan area range as the ground frame location.

Further, the approach of forming the extension area in step S2 comprises: on the basis of the working area, an area formed by rotating and extending a pre-set angle towards the door frame direction from the working area is the extension area.

Preferably, the pre-set angle of extension is smaller than or equal to 90°.

Preferably, the pre-set angle of extension is smaller than or equal to 70°.

Preferably, the pre-set angle of extension is smaller than or equal to 50°.

Further, the approach of adjusting the laser scan area range in step S3 comprises: when the door leaf is within the range inside of the door frame, the laser scan area is the working area; when the door leaf is within the range of entrance or exit of the door frame, the laser scan area is a sum of the working area and the extension area.

Further, the approach of determining the door leaf location is that: when the sensor continuously receives trigger signals and the distance between the trigger point and the sensor is within a pre-set range of the ground frame distance, it is represent that the door leaf is inside of the door frame; when the sensor cannot receive trigger signals within the range of the ground frame pre-set values, it is represent that the door leaf is within the range of the entrance or exit of the door frame.

Further, the laser scan area forms an angle smaller than or equal to 30° with the door leaf along the perpendicular direction, then the approach of determining the door leaf location is that: when the sensor continuously receives trigger signals complying with a change curve of a first pre-set distance, it is represent that the door leaf is to enter into the entrance or exit of the door frame from the inside of the door frame.

When the sensor continuously receives trigger signals complying with a change curve of a second pre-set distance, it is represent that the door leaf is to enter into the inside of the door frame from the entrance or exit of the door frame.

Further, the application analysis section comprises: an installation position analyzing module, which is used for analyzing an installation orientation of the sensor.

Further, the installation position analyzing module comprises sensor orientation analysis, which includes: first, performing laser scan at a maximum scan precision within the maximum scan area range of the sensor; then determining a sensor scan area orientation according to a result of scan.

Further, the approach of determining the sensor scan area orientation according to the result of scan includes:
step (1), determining whether a third pre-set distance change curve appears, if yes, proceeding to step (2), if no, the installation orientation of the sensor does not comply with a pre-set condition;
step (2) obtaining information of scan points complying with the third pre-set distance change curve, and determining whether said information of scan points conforms to a pre-set range, if yes, proceeding to step (3), if no, the installation orientation of the sensor does not comply with the pre-set condition;
step (3) counting the number of scan points complying with the third pre-set distance change curve, and determining whether said number is within a pre-set range of numbers of the scan points, if yes, it is represent that the sensor is installed correctly, if no, it is represent that the installation orientation of the sensor does not comply with the pre-set condition;
step (4) repeating the cycle of steps (1) to (3) until the sensor is correctly installed.

Further, the third pre-set distance change curve is a scan point-distance change curve having specular reflection transition change thereon.

Further, the installation position analyzing module further comprises: prompting the user that the sensor is correctly installed when the sensor is correctly installed; and prompting the user to change the installation position or installation orientation of the sensor when the installation orientation of the sensor does not comply with the pre-set condition.

Further, the application analysis section comprises a scan area resolution adjusting module. Said scan area resolution adjusting module is used for dividing the laser scan area into at least two working areas with different resolutions, among which the working area with a higher resolution is at a side near the door frame, while the working area with a lower resolution is at a side near the door leaf rotation shaft. Wherein, the side near the door frame is a primary dangerous area and is a main area in which the revolving door is likely to squash or hit the human body; the side near the door leaf rotation shaft is a secondary dangerous area and is an area in which the revolving door might squash or hit the human body.

Further, the scan area resolution adjustment comprises subarea analyzing. The approach of subarea analyzing is to draw a vertical line by taking the sensor as a base point and divide the scan area of the sensor into a side near the door frame and a side near the door leaf rotation shaft by using the vertical line as a border.

Further, in said subarea analyzing, the side near the door frame is defined as the primary dangerous area and the side near the door leaf rotation shaft is defined as the secondary dangerous area.

Further, said subarea analyzing can further differentiate scan areas with different resolutions in the primary dangerous area or in the secondary dangerous area according to the pre-set information.

Preferably, in the primary dangerous area, based on a line between the ground frame location and the sensor, a part above the ground frame location can be classified as a highest resolution area, and an area between the line from the ground frame location to the sensor and the vertical line can be classified as a secondary high resolution area.

Preferably, in the secondary dangerous area, according to the scan point-distance curve corresponding to said area, the secondary dangerous area can be divided into two or more scan areas with different resolutions by using inflection points of the curve as points of division.

Preferably, among the two or more scan areas in the secondary dangerous area, the area closer to the vertical line has a higher resolution.

Preferably, among the two or more scan areas in the secondary dangerous area, the area closest to the vertical line has the highest resolution, while the rest areas have decreasing resolutions under the highest resolution along the scan direction.

Further, said decreasing can be a continuous decreasing or a non-continuous decreasing, or it can be a wave mode decreasing.

Preferably, the working area with a higher resolution has a scan resolution of 0.01-1.0°, and the working area with a lower resolution has a scan resolution of 0.015-30.0°.

Further, the side near the door frame is a side at which the sensor detects specular reflection features, and the side near the door leaf rotation shaft is a side at which the sensor is unable to detect specular reflection features.

Further, said laser sensor for human body safety protection for use in a revolving door is installed at the top of the door leaf within 50cm from the vertical outer frame of the door leaf.

Further, the optical scanning apparatus described in the patent document with the patent No. ZL200510129141.1 can be used to achieve corresponding functions of the laser scan range calculation section.

The present invention at least has one of the following advantages:
1. The laser optical scanning and detecting technique adopted in the technical solution of the present invention is used for the non-contact safety protection sensor, and as compared to the contact pressure deformation sensor, a safety brake is performed before the door leaf hits or squashes the human body, so that better user's experience is achieved.
2. The technical solution of the present invention adopts the laser scanning and detecting technique, which, as compared to the existing non-contact infrared optical technique, has a small laser beam divergence angle, and the light beam width at a distance of 2m can be decreased to 0.8m, so it can effectively detect objects with a diameter of about 1cm, such as a finger. As compared to the infrared optical technique, the detection precision is greatly improved.
3. The technical solution of the present invention adopts the laser scanning and detecting technique, and the light beams may have a very small interval therebetween, so the detection resolution is increased so greatly that it can almost realize seamless detection, thereby a complete protection for the entire door can be realized.
4. The technical solution of the present invention adopts the laser scanning and detecting technique based on laser pulse. Since the laser pulse can have very high energy, as compared to the existing non-contact triangular reflection infrared optical technology and trigonometric ranging infrared optical technology, its laser working distance can be tens of meters, so the working distance is greatly increased as compared to the infrared technology.
5. As compared to existing sensors, the laser sensor provided by the present invention solves the technical problem that the existing laser sensors can only be installed on the door frame. Moreover, it realizes automatic adjustment of the detection range. When the door leaf of the revolving door rotates to the entrance and exit position, the detection range of the sensor can be automatically extended by a certain distance, so as to realize effective detection and protection to the outermost edge of the door leaf. When the door leaf of the revolving door rotates to the inside of the door frame, the detection range of the sensor retracts so as to reduce energy consumption while avoiding mistaken sensing being triggered by the internal diameter of the revolving door. Thus the monitoring and protection range of the laser sensor is further improved.
6. The laser sensor provided by the present invention also has the functions of automatically identifying its installation position on the revolving door and automatically selecting the working mode and detection area according to the identified installation position. Meanwhile, the laser sensor of the present invention also has the function of automatically setting the corresponding detection area and resolutions.

### Brief Description of the Drawings

Fig. 1 is a structural diagram of a sensor of the present invention;
Fig. 2 is a schematic drawing of a location of a laser scan area of the sensor of the present invention;
Fig. 3 is a schematic drawing of a way of tilt of the laser scan area of the sensor of the present invention;
Fig. 4 shows a scan point-distance curve when non-specular reflection of the sensor of the present invention occurs;
Fig. 5 shows a scan point-distance curve when specular reflection of the sensor of the present invention occurs;
Fig. 6 is a schematic drawing of resolutions of subarea of a laser scan area of the sensor of the present invention;
Fig. 7 is a schematic drawing of pre-set distance information of a safety analysis module of sensor of the present invention.

### Detailed Description of the Invention

To further clarify the object, technical solution and advantages of the present invention, a further detailed description of the present invention will be taken with reference to the drawings. It shall be understood that the specific embodiments described herein are merely for explaining the invention rather than limiting the present invention.

### Embodiment 1

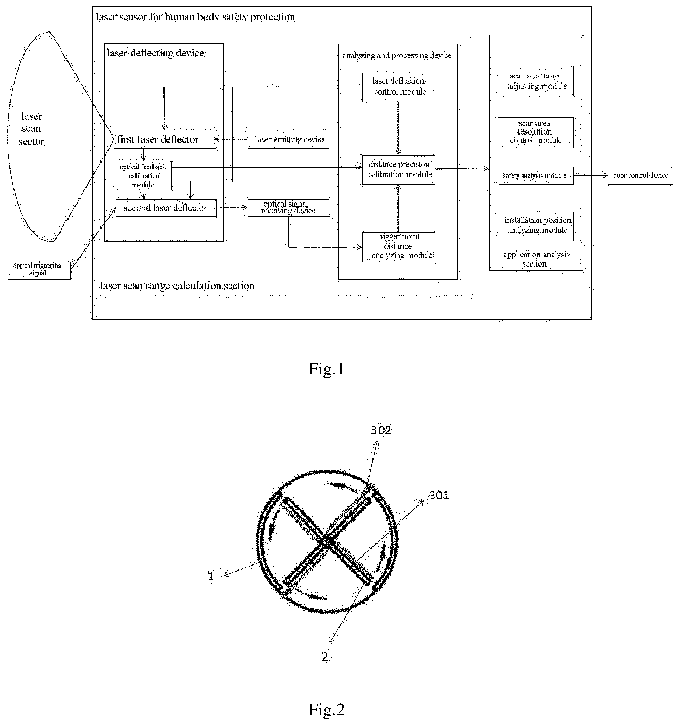

A laser sensor for human body safety protection for use in a revolving door, as door as set out in claim 1 and shown in Figs. 1 and 2, comprises a laser scan range calculation section and an application analysis section. The laser scan range calculation section comprises a laser emitting device, a laser deflecting device, an optical signal receiving device, and an analyzing and processing device. The sensor is installed at the top of a door leaf 2 of the revolving door within 20cm from the vertical outer frame of the door leaf 2 of the revolving door. Wherein, the laser emitting device transmits pulse laser signals to the laser deflecting device. The laser deflecting device deflects directional pulse laser signals by a pre-set angle under the control of the analyzing and processing device and forms a laser scan area 3. The laser scan area 3 has a rotation angle of 110°. The laser scan area 3 is in front of the area of the door leaf 2 and is at a distance of 0.05cm from the door leaf along the rotation direction of the door leaf 2 of the revolving door. The optical signal receiving device is used to receive returned laser signals and transmit said signals to the analyzing and processing device. The analyzing and processing device comprises a laser deflection control module and a trigger point distance analyzing module.

The laser deflection control module is in signal connection with the laser deflecting device for controlling a deflection angle of the laser deflecting device.

The trigger point distance analyzing module first measures a time difference t between laser signal transmission and reception on the basis of a TOF technology, i.e. a time of flight calculation technology, then said time difference t is multiplied by the light speed v so as to obtain the information of distance between the optical trigger signal and the sensor, and it is analyzed to obtain the distance information of the trigger point and it is sent to the safety analysis module.

The application analysis section comprises a safety analysis module. The safety analysis module is connected to a door control device of the revolving door and controls motion state of the door leaf of the revolving door after making analysis and determination on the basis of the trigger point distance information received from the trigger point distance analyzing module. Said door control device can be a device having driving and control functions installed on the revolving door for controlling whether the door leaf of the revolving door should rotate relative to the door frame and for controlling a rotation direction and a rotation speed.

The safety analysis module comprises: trigger point danger analysis, which includes: first obtaining the trigger point distance information resulted from the trigger point distance analyzing module; then comparing the trigger point distance information and information of a pre-set distance of the trigger point, when the trigger point distance is greater than or equal to the pre-set distance of the trigger point, the trigger point is a safe trigger point and no control signal will be generated; when the trigger point distance is smaller than the pre-set distance of the trigger point, the trigger point is a dangerous trigger point and a corresponding control signal will be generated and sent to the door control device. Said corresponding signal is a control signal for controlling the door leaf to stop rotating or to rotate more slowly.

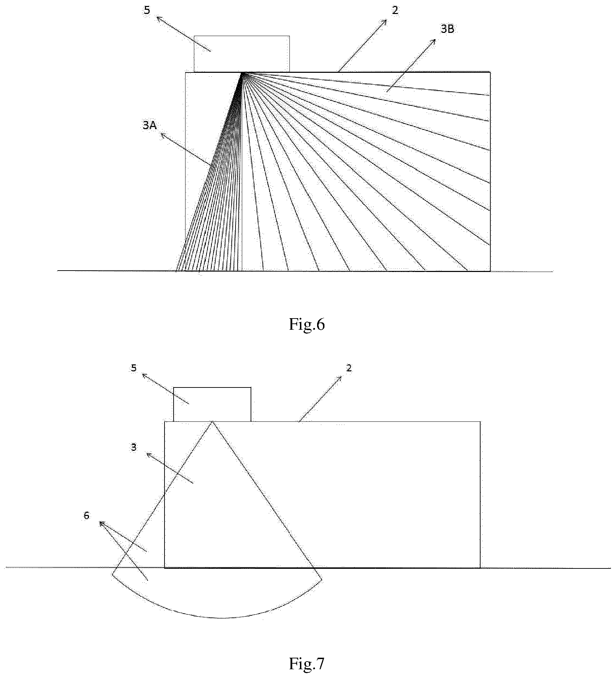

The information of the pre-set distance, as shown in Fig. 7, usually includes a distance from the sensor to the rotation shaft of the door leaf of the revolving door, a distance from the sensor to the ground, a distance from the sensor to a ground frame, a distance from the sensor to a post, and a distance from the sensor to a fixed equipment or decoration in the revolving door when there is no person or intruder in the revolving door, and so on. Each of the scan points is provided with corresponding pre-set distance information by means of simulated debugging when leaving the factory on the basis of the pre-set installation position and installation height as well as the desired working area.

The applicant has discovered based on researching that, the main reason why the existing laser sensor can only be installed at a fixed position on the revolving door in a manner of receiving optical signals at one end and transmitting optical signals at the other end is in that: since the revolving door has a complex internal structure, the existing laser sensor based on the TOF technology will easily be erroneously triggered during working of the revolving door, such as when the ground frame of the revolving door is scanned, etc., thus a light-shielding type of laser sensor is usually used in cooperation with other sensors or other sensors are directly used as the safety protection sensors. The present invention, however, by means of the pre-set distance information on the basis of the TOF technology, defines a monitoring area requiring the sensor to generate effective response signals, thus avoiding the occurrence of erroneous triggering to a large extent.

### Embodiment 2

The laser sensor for human body safety protection for use in the revolving door as described according to embodiment 1, wherein the trigger point distance analyzing module first calculates a time difference between transmission of the laser pulse and reception of the returned signal by means of a delay time converter (TDC: time to digital converter), then calculates a time of flight (TOF) of the light pulse (i.e. information of a distance between the trigger point and the sensor) from said time difference and the light speed by means of a calculator.

### Embodiment 3

The laser sensor for human body safety protection for use in the revolving door as described according to embodiment 1, wherein the pre-set distance information is done by a initialization operation, which has the following procedure: first, the sensor is turned on when no user passes through the revolving door, so that it scans at a pre-set maximum scan angle, and the door leaf of the revolving door is made to rotate at a pre-set speed and in a pre-set direction; then the sensor uses the trigger point distance information received at respective scan points as the pre-set distance information.

Wherein, during the initialization operation, when distance information of two or more trigger points appears at the same scan point in the same scan period, the distance information of the trigger point closest to the sensor is used as the pre-set distance information. When distance information of two or more trigger points appears at the same scan point in the same scan period, it usually means that the sensor detects the glass on the door leaf or door frame of the revolving door.

During the initialization operation, when distance information of two or more trigger points appears at the same scan point in the same scan period, the distance information of the trigger point farthest from the sensor is used as the pre-set distance information, and the rest of the distance information is recorded and stored, so as to be invoked at the time as needed. When distance information of two or more trigger points appears at the same scan point in the same scan period, it usually means that the sensor detects fixed decorative objects and the like placed within the revolving door.

### Embodiment 4

The laser sensor for human body safety protection for use in the revolving door as described according to embodiment 3, wherein when distance information of two or more trigger points appears at the same scan point in the same scan period, the distance information of the trigger point farthest from the sensor is used as the pre-set distance information, and the rest of the distance information is recorded and stored, so as to be invoked at the time as needed. Said time as needed is the time when it is recorded the information of distances, in each of the scan periods, of the scan points at which distance information of two or more trigger points appear, and for consecutive scan points thereof, scan point-distance curves having a certain change rule in the corresponding scan periods are drawn. When a certain scan point of the sensor scans a trigger signal, and the following several consecutive scan points have scanned scan point-distance curves that comply with the above-mentioned change rule, then the trigger will be considered as a safe trigger. If the following several consecutive scan points have scanned scan point-distance curves that do not comply with the above-mentioned change rule, then the trigger will be considered as a dangerous trigger. By means of the above setting, abnormal or unsafe stop or slowing down of the revolving door resulted from erroneous triggering of the sensor caused by decorative objects in the revolving door can be further avoided, thereby improving user's experience.

### Embodiment 5

The laser sensor for human body safety protection for use in the revolving door as described according to embodiment 3, wherein during the initialization operation, when specular reflection occurs, i.e. when there is a transition change in the scan point-distance curve, first, curvature values of the scan point-distance curves of a scan point immediately before a starting point of the transition change and a scan point immediately after an end point of the transition change are recorded as a minimum value and a maximum value, and a difference ΔX between the minimum value and the maximum value is calculated; then a number n of scan points between the minimum value and the maximum value is counted, and an average curvature increase for each scan point is calculated by Δx=ΔX/n; next, each of the scan points between the starting point and the end point of the transition change is assigned with a calculated curvature value, and said calculated curvature value kₙ=kₙ₋₁+Δx, wherein kₙ is a calculated curvature of a current scan point, kₙ₋₁ is a calculated curvature of a scan point immediately before the current scan point, and k₀=the minimum value, and kₘₐₓ=the maximum value; then the scan point immediately before the starting point of the transition change and the scan point immediately after the end point of the transition change are connected by a curve, and curvatures of said curve at respective scan points of the transition change are the calculated curvatures thereof; finally, pre-set values of distances of respective scan points during the transition change are assigned according to the drawn scan point-distance curve. By means of such a setting, the problem of the pre-set distance being too long caused by the specular reflection phenomenon can be eliminated automatically, and erroneous triggering of the sensor caused by disappearance of the specular reflection points can be avoided.

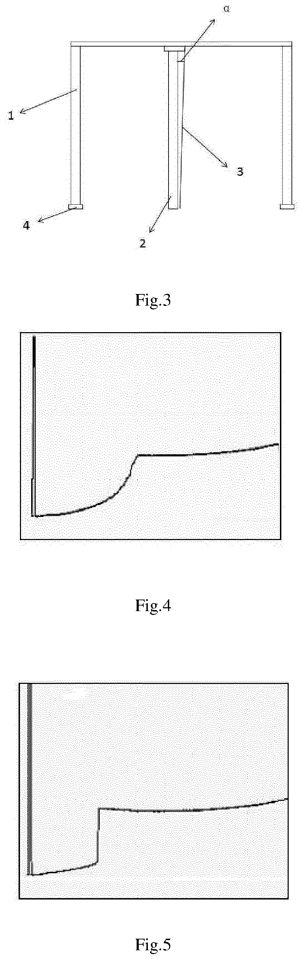

The applicant has discovered based on research that, when there is no specular reflection of the post, surfaces of an object are successive, and distances between adjacent points also change continuously. In normal cases, a detection distance corresponding to each light spot is a round trip distance of the pulsed light beam, and the monitored point-distance curve is as shown in Fig. 4. The detection distance of two adjacent points relatively changes little, and the change is continuous. When reflection occurs, the monitored point-distance curve is as shown in Fig. 5, the pulsed light beam is reflected by the post, the light beam is reflected again by the ground to come back to the sensor, so that the total distance of flight (TOF) of the pulsed laser beam increases, and the distance increased is generally twice or more of the distance from the detection point to the ground. At this time, the detection distance of the detection point will undergo a transition change as compared to adjacent detection points, and sometimes, the scan point distance change tends to 0 in a range of several scan points after the transition change, i.e. the scan point-distance curve tends to be a straight line. Generally, the scan point which firstly has the transition change is used as the starting scan point of the specular reflection, and the scan point which begins to have a regularly increasing or decreasing change of distance to adjacent scan points is used as the end scan point of the specular reflection.

### Embodiment 6

The laser sensor for human body safety protection for use in the revolving door as described according to embodiment 3, wherein during the initialization operation, when specular reflection occurs, i.e. when there is a transition change in the scan point-distance curve, the sensor sends a stop instruction to the door control system and sends a sound, signal or prompt light to the user to prompt the user to shield the positions where specular reflection occurs with non-mirror thin substance such as paper or ground films, and continues the initialization operation.

### Embodiment 7

The laser sensor for human body safety protection for use in the revolving door as described according to embodiment 1, wherein the application analysis section comprises a scan area range adjusting module. The scan area range adjusting module is in signal connection with the trigger point distance analyzing module, and compares the received distance information with the pre-set trigger information to make analysis and determination according to the obtained trigger point distance information, then it adjusts a maximum angle at which the laser light rotates along a pre-set direction by sending a rotation control instruction to the laser deflecting device, thereby controlling the scan range of the laser scan area.

### Embodiment 8

The laser sensor for human body safety protection for use in the revolving door as described according to embodiment 1, wherein the application analysis section further comprises a scan area range adjusting module. The scan area range adjusting module is in signal connection with the safety analysis module. At this point, the safety analysis module further comprises trigger analysis, which includes: first, comparing the received distance information to the pre-set trigger information, then according to the result of comparison, when the door leaf 2 is inside of the door frame 1, sending an instruction A to the scan area range adjusting module, which, upon receiving said instruction A, controls the laser scan area 3 to be a working area 301; when the door leaf 2 is within the range of entrance or exit of the door frame 1, sending an instruction B to the scan area range adjusting module, which, upon receiving said instruction B, controls the laser scan area 3 to be a sum of the working area 301 and an extension area 302.

### Embodiment 9

The laser sensor for human body safety protection for use in the revolving door as described according to embodiment 7 or 8, wherein the scan area range adjusting module comprises scan area control analysis, which includes the following steps:

### S1. determining the working area 301.

The approach of determining the working area 301 in step S1 is that: forming the working area 301 according to a factory pre-set value. The pre-set value is an area formed by rotating 90° using the direction horizontally facing the rotation shaft of the door leaf 2 as a horizontal line while using the sensor as the base point and the pulse signal vertically emitted downward as the vertical line, i.e. the working area 301.

### S2. forming the extension area 302.

The approach of forming the extension area 302 in step S2 is that: forming an area by extending 20° towards the door frame from the working area on the basis of the working area 301 and according to the factory pre-set value, which is the extension area 302.

S3. adjusting the scan area range of the laser scan area 3 based on the area information obtained from steps S1 and S2.

The approach of adjusting the scan area range of the laser scan area 3 in step S3 is that: comparing the received distance information to the pre-set trigger information for analysis and determination, and when the door leaf 2 is inside of the door frame 1, the laser scan area 3 is the working area 301; when the door leaf 2 is in the range of entrance or exit of the door frame 1, the laser scan area 3 is the sum of the working area 301 and the extension area 302.

The applicant has discovered based on research that: as for the existing sensors for use in the revolving door, the detection areas thereof are fixed after the installation is completed, and in order to prevent the light beam from detecting the internal diameter of the revolving door so as to trigger the sensor to detect, which causes the revolving door unable to work normally, all of the detection areas of existing sensors need to be smaller than the internal diameter of the revolving door, thus when the door leaf moves to the entrance and exit position, the outer edge of the door leaf cannot be detected and protected and it will easily hit or squash the human body. The present invention, however, can dynamically adjust the detection area, namely, when the door leaf moves to the inner side of the revolving door, the detection range of the sensor is the working area 301, thereby avoiding triggering the sensor by the internal diameter of the revolving door; when the door leaf moves to the entrance and exit position of the revolving door, the detection range thereof is the sum of the working area 301 and the extension area 302. The protection area at this time is beyond the outer edge of the door frame 2, thus preventing the outer edge of the door frame 2 from hitting or squashing the human body.

### Embodiment 10

The laser sensor for human body safety protection for use in the revolving door as described according to embodiment 7 or 8, wherein the scan area range adjusting module comprises scan area control analysis, which includes the following steps:

### S1. determining the working area 301.

The approach of determining the working area 301 in step S1 is that: forming the working area 301 according to the pre-set value. The pre-set value is obtained by initialization operation, i.e. the sensor is used as a base point, a maximum scan angle of the scan area 3 facing the door leaf 2 is used as a border of one side, and a vertical line under the sensor is used as a border of the other side, the scan area formed between the two borders is the working area 301.

### S2. forming the extension area 302.

The approach of forming the extension area 302 in step S2 is that: performing initialization operation according to the pre-set value: on the basis of the working area 301, an area formed by a maximum scan angle of extending from the working area towards the door frame to a side of the sensor facing the door frame 1 is the extension area 302.

S3. adjusting the scan area range of the laser scan area 3 based on the area information obtained from steps S1 and S2.

The approach of adjusting the scan area range of the laser scan area 3 in step S3 is that: comparing the received distance information to the pre-set trigger information for analysis and determination, when the door leaf 2 is inside of the door frame 1, the laser scan area 3 is the working area 301; when the door leaf 2 is in the range of entrance or exit of the door frame 1, the laser scan area 3 is the sum of the working area 301 and the extension area 302.

### Embodiment 11

The laser sensor for human body safety protection for use in the revolving door as described according to one of embodiments 9-10, wherein the work area can be formed by the following steps:
(1) performing laser scan within the maximum scan area range of the sensor to form the pre-set scan area and to obtain a ground frame location;
(2) on the basis of the obtained ground frame location information, dividing the pre-set scan area into two parts by using a line between the sensor and the ground frame as a base line, wherein a side from the base line and facing the door leaf rotation shaft is the working area.

The approach of obtaining the ground frame location is that: first determining whether 2 or more distance values appear at the same scan point; if yes, further selecting the scan point near an inflection point of the scan point-distance curve and relatively closer to the sensor as ground frame area information; if no, according to pre-setting, drawing a vertical line by taking the position of the sensor as the base point to divide the pre-set scan area into two parts, selecting the scan point-distance curve of the scan area that is at a location being pre-set to face the door frame, and taking an inflection point thereon closest to the vertical line as a starting point to extend towards the side of the curve whose distance is gradually decreasing, and selecting m scan points as the ground frame area information, said m scan points being selected according to a pre-set value; then selecting one scan point from the ground frame area information as the ground frame location. Wherein, the scan point corresponding to the minimum value or the scan point corresponding to the intermediate value is preferably used as the ground frame location.

The ground frame location can also be obtained by the approach of setting the trigger point which appears in the pre-set scan area range and whose distance has non-continuous changes or transition change as the ground frame location.

### Embodiment 12

The laser sensor for human body safety protection for use in the revolving door as described according to one of embodiments 7-11, wherein the approach of comparing the received distance information and the pre-set trigger information for analysis and determination is that: when the sensor continuously receives trigger signals and the distance from the trigger point to the sensor is within the range of pre-set values for the ground frame distance, it is represent that the door leaf is inside of the door frame; when the sensor cannot received trigger signals within the range of pre-set values for the ground frame distance, it is represent that the door leaf is within the range of the entrance or exit of the door frame.

### Embodiment 13

The laser sensor for human body safety protection for use in the revolving door as described according to one of embodiments 7-11, wherein as shown in Fig. 3, the laser scan area 3 is in front of the door leaf 2 along a rotation direction of the door leaf 2 and forms an angle of 1° with the door leaf 2 along a perpendicular direction, and the top of the laser scan area 3 is far away from the door leaf 2, while the bottom thereof is close to the door leaf 2. At this point, the approach of determining the position of the door leaf is that: when the sensor continuously receives trigger signals complying with a first pre-set distance change curve, it is represent that the door leaf is to enter the entrance or exit of the door frame from the inside of the door frame; when the sensor continuously receives trigger signals complying with a second pre-set distance change curve, it is represent that the door leaf is to enter the inside of the door frame from the entrance or exit of the door frame.

The first pre-set distance change curve is that: the sensor first detects the top of the door frame 1, and driven by the door leaf 2, the light beam of the sensor detects from the top of the door frame 1 to the bottom of the door frame 1, and the distance change complies with a pre-set rule of change, meanwhile, the sensor cannot detect the ground frame 4.

The second pre-set distance change curve is that: the sensor first detects the top of the door frame 1, and driven by the door leaf 2, the light beam of the sensor detects from the top of the door frame 1 to the bottom of the door frame 1, and the distance change complies with a pre-set rule of change, meanwhile, the sensor can detect the ground frame 4.

The applicant has discovered that there is no obstacle such as glass at the top and bottom of the entrance and exit of the revolving door, and in order to make it convenient for people to walk through the entrance and exit of the revolving door, no ground frame for fixing the door frame will be arranged, so measurement and determination of the entrance and exit position of the revolving door can be achieved thereby. When installing the sensor, the laser light is installed to be slightly tilted in angle, so that the light curtain and light beam will first detect the top of the door frame, when it is found that the corresponding light beam detects the door frame regularly and the distance is just the radius of the door, the door leaf can be considered as leaving the entrance and exit position of the revolving door and the detection area should retract. After coming inside of the door, since metal bottom frames of the revolving door on the ground can be detected, it can be determined that the sensor has rotated to the inside of the door. When a regularly changing curve with a distance equal to the door frame 1 is detected again, and the ground frame cannot be detected, it can be determined that the revolving door comes to the entrance and exit position and the range of the area protected needs to be enlarged for the light curtain.

At this time, when the door leaf moves to the entrance and exit of the door frame 1, since the monitored area is enlarged, the sensor can sense trigger signals in a range from the ground to a certain height. When the user holds or leans on the post of the door frame 1 or puts his/her foot into the inside of the door frame 1, the sensor can detect in time signals triggered by fingers of the user in the unsafe area on the post, or signals triggered by feet of the user in the unsafe area, and then controls to brake the door leaf so as to avoid hitting or squashing the fingers and feet of the user and realize improved safety protection.

### Embodiment 14

The laser sensor for human body safety protection for use in the revolving door as described according to one of embodiments 7-11, wherein the laser scan area 3 is in front of the door leaf 2 along a rotation direction of the door leaf 2 and forms an angle of 5° with the door leaf 2 along a perpendicular direction, and the top of the laser scan area 3 is close to the door leaf 2 and the bottom thereof is far away from the door leaf 2. At this point, the approach of determining the position of the door leaf is that: when the sensor continuously receives trigger signals complying with the first pre-set distance change curve, it is represent that the door leaf is to enter the entrance or exit of the door frame from the inside of the door frame; when the sensor continuously receives trigger signals complying with the second pre-set distance change curve, it is represent that the door leaf is to enter the inside of the door frame from the entrance or exit of the door frame.

The first pre-set distance change curve is that: the sensor first detects the bottom of the door frame 1, and driven by the door leaf 2, the light beam of the sensor detects from the bottom of the door frame 1 to the top of the door frame 1, and the distance change complies with a pre-set rule of change, meanwhile, the sensor cannot detect the ground frame 4.

The second pre-set distance change curve is that: the sensor first detects the bottom of the door frame 1, and driven by the door leaf 2, the light beam of the sensor detects from the bottom of the door frame 1 to the top of the door frame 1, and the distance change complies with a pre-set rule of change, meanwhile, the sensor can detect the ground frame 4.

### Embodiment 15

The laser sensor for human body safety protection for use in the revolving door as described according to embodiment 1, wherein the application analysis section further comprises an installation position analyzing module for analyzing an installation orientation of the sensor. Said device can be used for assisting the user in determining whether the installation position and orientation of the sensor are correct, thus avoiding that the sensor cannot function normally due to an inappropriate installation position or a wrong installation orientation. The existing sensors, however, usually require the user to determine the installation position and installation orientation by himself/herself, and it is quite common that the sensor cannot function normally due to an inappropriate installation position or a wrong installation orientation, or false alarms frequently occur, which seriously affect the user's experience.

### Embodiment 16

The laser sensor for human body safety protection for use in the revolving door as described according to embodiment 15, wherein the installation position analyzing module comprises sensor orientation analysis, which includes: first, performing laser scan at a maximum scan precision within the maximum scan area range of the sensor; then determining a sensor scan area orientation according to a result of scan.

### Embodiment 17

The laser sensor for human body safety protection for use in the revolving door as described according to embodiment 16, wherein the approach of determining the sensor scan area orientation according to the result of scan is that:
step (1), determining whether a third pre-set distance change curve appears, if yes, proceeding to step (2), and if no, the installation orientation of the sensor does not comply with a pre-set condition;
step (2) obtaining information of scan points complying with the third pre-set distance change curve, and determining whether said position information of scan points conforms to a pre-set range, if yes, proceeding to step (3), and if no, the installation orientation of the sensor does not comply with the pre-set condition;
step (3) counting the number of scan points complying with the third pre-set distance change curve, and determining whether said number is within a pre-set range of numbers of the scan points, if yes, the sensor is installed correctly, and if no, the installation orientation of the sensor does not comply with the pre-set condition;
step (4) repeating the cycle of steps (1) to (3) until the sensor is correctly installed.

### Embodiment 18

The laser sensor for human body safety protection for use in the revolving door as described according to embodiment 17, wherein the third pre-set distance change curve is a scan point-distance change curve having specular reflection transition change thereon.

The applicant has discovered that when there is no specular reflection of the post, surfaces of an object are successive, and distances between adjacent points also change continuously. In normal cases, a detection distance corresponding to each light spot is a round trip distance of the pulsed light beam, and the monitored point-distance curve is as shown in Fig. 4. The detection distance of two adjacent points relatively changes little, and the change is continuous. When reflection occurs, the monitored point-distance curve is as shown in Fig. 5, the pulsed light beam is reflected by the post, the light beam is reflected again by the ground to come back to the sensor, so that the total distance of flight (TOF) of the pulsed laser beam increases, and the distance increased is generally twice or more of the distance from the detection point to the ground. On the basis of this change, the installation orientation of the sensor can be determined by detecting the specular reflection of the post, thereby determining the orientation of the laser scan area to make the scan area coincide with a pre-set working position. Therefore, sensor malfunctioning owing to an inappropriate installation can be avoided.

### Embodiment 19

The laser sensor for human body safety protection for use in the revolving door as described according to one of embodiments 17-18, wherein the installation position analyzing module further comprises: prompting the user that the sensor is correctly installed when the sensor is correctly installed; and prompting the user to change the installation position or installation orientation of the sensor when the installation orientation of the sensor does not comply with the pre-set condition.

### Embodiment 20

The laser sensor for human body safety protection for use in the revolving door as described according to embodiment 1, wherein the application analysis section further comprises a scan area resolution adjusting module. Said scan area resolution adjusting module is used for dividing the laser scan area into at least two working areas with different resolutions, among which the working area with a higher resolution is at a side near the door frame, while the working area with a lower resolution is at a side near the door leaf rotation shaft. Wherein, the side near the door frame is a primary dangerous area and is an area in which the revolving door trends to squash or hit the fingers or feet of the human body; the side near the door leaf rotation shaft is a secondary dangerous area and is an area in which the revolving door might squash or hit the human body. The higher the resolution, the smaller the rotation angle between adjacent scan points. The side near the door frame is the side of the sensor that detects the specular reflection feature, and the side near the door leaf rotation shaft is the side of the sensor that cannot detect the specular reflection feature.

By means of such a setting, the resolution of the sensor can be automatically adjusted according to different degrees of danger of the monitored areas and different target monitored objects, thus realizing precise monitoring of the primary dangerous area to prevent the revolving door from squashing or hitting the fingers or feet of the human body. Meanwhile, a lower monitoring intensity is applied to the secondary dangerous area, thus reducing the total energy consumption of the sensor while ensuring that monitoring of the human body is realized, and prolonging the life time of the sensor to some extent. As compared to the sensor that monitors at a high resolution all the time, the sensor that employs the scan area resolution adjusting module can save more than 10% of energy, and the life time thereof increases by over 10%.

### Embodiment 21

The laser sensor for human body safety protection for use in the revolving door as described according to embodiment 20, wherein the scan area resolution adjustment comprises subarea analysis, as shown in Fig. 6, and the approach of subarea analysis is that: drawing a vertical line by taking the sensor as a base point and dividing the scan area of the sensor into a side near the door frame and a side near the door leaf rotation shaft by using the vertical line as a border. The side near the door frame is defined as the primary dangerous area and the side near the door leaf rotation shaft is defined as the secondary dangerous area. Wherein, the side near the door frame is a high resolution scan area 3A, and the side near the door leaf rotation shaft is a low resolution scan area 3B.

### Embodiment 22

The laser sensor for human body safety protection for use in the revolving door as described according to embodiment 21, wherein the subarea analysis can further divide the primary dangerous area or the secondary dangerous area into scan areas with different resolutions according to the pre-set information. Wherein, in the primary dangerous area, based on a line between the ground frame location and the sensor, a part above the ground frame location can be classified as a highest resolution area, and an area between the line from the ground frame location to the sensor and the vertical line can be classified as a secondary high resolution area. For example, the resolution of the highest resolution area is 0.1°, and the resolution of the secondary high resolution area is 1.0°.

### Embodiment 23

The laser sensor for human body safety protection for use in the revolving door as described according to embodiment 21, wherein the subarea analysis can further divide the primary dangerous area or the secondary dangerous area into scan areas with different resolutions according to the pre-set information. Wherein, in the secondary dangerous area, according to the scan point-distance curve corresponding to said area, the secondary dangerous area can be divided into two or more scan subareas with different resolutions by using inflection points of the curve as points of division.

### Embodiment 24

The laser sensor for human body safety protection for use in the revolving door as described according to embodiment 23, wherein among the two or more scan subareas in the secondary dangerous area, the subarea closer to the vertical line has a higher resolution.

### Embodiment 25

The laser sensor for human body safety protection for use in the revolving door as described according to embodiment 23, wherein among the two or more scan subareas in the secondary dangerous area, the subarea closest to the vertical line has the highest resolution, while the rest areas have decreasing resolutions below the highest resolution along the scan direction.

### Embodiment 26

The laser sensor for human body safety protection for use in the revolving door as described according to embodiment 25, wherein said decreasing can be a continuous decreasing. Take four subareas as an example, the subarea closest to the vertical line is A, and the three subareas B, C and D are arranged in turn along the door leaf rotation shaft direction. Wherein, the resolution of subarea A is the highest, and a rotation angle between its adjacent scan points is 1°. Next comes the resolution of subarea B, and a rotation angle between its adjacent scan points is 2°. Then comes the resolution of subarea C, and a rotation angle between its adjacent scan points is 3°. The resolution of subarea D is the lowest, and a rotation angle between its adjacent scan points is 4°.

Said decreasing can also be a non-continuous decreasing. Take four subareas as an example, the subarea closest to the vertical line is A, and the three subareas B, C and D are arranged in turn along the door leaf rotation shaft direction. The resolution of subarea A is the highest, and a rotation angle between its adjacent scan points is 1°. Next comes the resolution of subarea B, and a rotation angle between its adjacent scan points is 2°. Then comes the resolution of subarea C, and a rotation angle between its adjacent scan points is 5°. The resolution of subarea D is the lowest, and a rotation angle between its adjacent scan points is 10°.

Said decreasing can also be a wave mode decreasing. Take four subareas as an example, the subarea closest to the vertical line is A, and the three subareas B, C and D are arranged in turn along the door leaf rotation shaft direction. The resolution of subarea A is the highest, and a rotation angle between its adjacent scan points is 1°. Next comes the resolution of subarea B, and a rotation angle between its adjacent scan points is 7°. Then comes the resolution of subarea C, and a rotation angle between its adjacent scan points is 4°. The resolution of subarea D is the lowest, and a rotation angle between its adjacent scan points is 8°.

### Embodiment 27

The laser sensor for human body safety protection for use in the revolving door as described according to embodiment 1, wherein the application analysis section comprises a safety analysis module and at least one of the scan area range adjusting module, the installation position analyzing module, and the scan area resolution adjusting module.

The safety analysis module controls motion state of the revolving door by the door control device after making analysis on the basis of the trigger point distance information. The scan area range adjusting module is used for automatically adjusting the scan area range. The installation position analyzing module is used for analyzing the installation orientation of the sensor. The scan area resolution adjusting module is used for dividing the laser scan area into at least two working areas with different resolutions, among which the working area with a higher resolution is at a side near the door frame, while the working area with a lower resolution is at a side near the door leaf rotation shaft.

### Embodiment 28

The laser sensor for human body safety protection for use in the revolving door as described according to embodiment 1, wherein as shown in Fig. 1, the laser deflecting device comprises a first laser deflector and a second laser deflector. The first laser deflector is used for deflecting laser signals emitted from the laser emitting device. The second laser deflector is used for deflecting optical triggering signals to the optical signal receiving device.

### Embodiment 29

The laser sensor for human body safety protection for use in the revolving door as described according to embodiment 28, wherein the first laser deflector and the second laser deflector are synchronized and rotate correspondingly under the control of the laser deflection control module. The corresponding rotation is that the second laser deflector can deflect the optical triggering signals generated from deflection by the first laser deflector to the optical signal receiving device.

### Embodiment 30

The laser sensor for human body safety protection for use in the revolving door as described according to one of embodiments 28 and 29, wherein the first laser deflector and the second laser deflector are polygon mirrors whose numbers of mirror surfaces correspond to each other. The first laser deflector and second laser deflector are fixed on the same rotation shaft and are driven to rotate by the same driving device.

### Embodiment 31

The laser sensor for human body safety protection for use in the revolving door as described according to one of embodiments 28 and 29, wherein the first laser deflector and the second laser deflector are polygon mirrors whose numbers of mirror surfaces correspond to each other. The first laser deflector and the second laser deflector are fixed on different rotation shafts, respectively and are driven to rotate by different driving devices.

### Embodiment 32

The laser sensor for human body safety protection for use in the revolving door as described according to embodiment 1, wherein the laser deflecting device comprises a polygon mirror and a corresponding driving device, one mirror surface of said polygon mirror facing the laser deflecting device and being used for deflecting laser signals to a target area, and another mirror surface thereof facing the optical signal receiving device and being used for deflecting optical feedback signals to the optical signal receiving device.

### Embodiment 33

The laser sensor for human body safety protection for use in the revolving door as described according to embodiment 1, wherein the laser deflecting device comprises an optical feedback calibration module for calibrating feedback optical signals.

The applicant has discovered that performances such as response time, gain, etc. of an element are affected by factors such as the ambient temperature, and accordingly, the product precision will be affected. By adding an optical feedback calibration module by the applicant, the product precision error resulted from the above affecting factors can be reduced, and the sensing accuracy and alarm accuracy of the product can be improved.

The optical feedback calibration module can be an optical feedback loop installed inside a product, and the length of the loop is a pre-set value. At this point, during working of the product, response time of the laser emitting device-optical feedback loop-optical signal receiving device can be calculated in real time or regularly, and since the length of the optical feedback loop is fixed, said response time mainly depends on differences between elements. Delay time of the elements can be calculated based on said response time, and when calculating the distance of each light spot, said delay time can be deducted in real time so as to achieve a calibration of the calculation of the optical feedback time.

### Embodiment 34

The laser sensor for human body safety protection for use in the revolving door as described according to embodiment 33, wherein said analyzing and processing device comprises a distance precision calibrating module, which calibrates a result of trigger point distance analysis from the trigger point distance analyzing module after obtaining the deflection control information of the laser deflection control module and the calibration information of the optical feedback calibration module. Said analyzing and processing device sends the calibrated trigger point distance information to the application analysis section.

The distance precision calibrating module can calibrate to obtain a set of compensation parameters for background objects of different distances and different reflectivities, and said set of parameters will be written into the memory of the laser sensor to be stored. When the laser sensor works normally, after the original values are calculated at each of the point, said compensation parameters need to be added.

The applicant has discovered that the pulse width at the receiving end of the product is several nanoseconds, and the pulse width is related to energy received at the receiving end, including factors such as reflectivity and distance. The sensor in use may have a distance calculation error owing to the above-mentioned factors, while the above method can compensate said error so as to improve the distance calculation precision of the product.

### Embodiment 35

The laser sensor for human body safety protection for use in the revolving door as described according to one of embodiments 1-34, wherein the total scan area generated by the sensor 5 is a sum of the laser scan area 3 and an invalid trigger area 6. The laser scan area 3 and the invalid trigger area 6 are separated by the pre-set distance information. The sensor only makes feedback actions to the trigger signals in the laser scan area 3.

## Claims

1. A laser sensor (5) for human body safety protection for use in a revolving door, wherein the laser sensor (5) comprises:
- a laser scan range calculation section comprising a laser emitting device, a laser deflecting device, an optical signal receiving device, and an analyzing and processing device; wherein, the laser emitting device transmits laser signals to the laser deflecting device; the laser deflecting device deflects the laser signals by a pre-set angle under the control of the analyzing and processing device and forms at least one laser scan area (3); the optical signal receiving device is used for receiving returned laser signals and transmitting said signals to the analyzing and processing device; the analyzing and processing device comprises a trigger point distance analyzing module, which makes analysis to obtain trigger point distance information according to signals sent from the optical signal receiving device;
- an application analysis section comprising a safety analysis module, which controls motion state of the revolving door through a door control device after making analysis on the basis of the trigger point distance information; and
- a safety analysis module comprising a trigger point danger analysis;
**characterized in that** said trigger point danger analysis includes:
- first obtaining the trigger point distance information resulted from the trigger point distance analyzing module,
- then comparing the trigger point distance information to information of a pre-set distance of the scan point,
- when the trigger point distance is greater than or equal to the pre-set distance of the scan point, the trigger point is a safe trigger point, and
- when the trigger point distance is smaller than the pre-set distance of the scan point, the trigger point is a dangerous trigger point and a corresponding control signal is generated;
wherein the application analysis section comprises a scan area range adjusting module; the scan area range adjusting module includes scan area control analysis, which includes the steps of:
S1. determining a working area (301);
S2. forming an extension area (302);
S3. adjusting the laser scan area range (3) based on the area information obtained from steps S1 and S2;
wherein the approach of adjusting the laser scan area range (3) in step S3 comprises: comparing the received distance information to the pre-set trigger information to make analysis and determination, and when the door leaf is inside of the door frame, the laser scan area (3) is the working area; when the door leaf is within the range of entrance or exit of the door frame, the laser scan area (3) is a sum of the working area (301) and the extension area (302), and wherein:
- the approach of determining the door leaf location is that: when the sensor continuously receives trigger signals and the distance between the trigger point and the sensor is within a pre-set range of the ground frame distance pre-set values, it is represent that the door leaf is inside of the door frame; when the sensor cannot receive trigger signals within the range of the ground frame pre-set values, it is represent that the door leaf is within the range of the entrance or exit of the door frame; or
- the laser scan area (3) forms an angle with the door leaf along a perpendicular direction, and the approach of determining the door leaf location is that: when the sensor continuously receives trigger signals complying with a first pre-set distance change curve, it is represent that the door leaf is to enter into the entrance or exit of the door frame from the inside of the door frame; when the sensor (5) continuously receives trigger signals complying with a second pre-set distance change curve, the door leaf is to enter into the inside of the door frame from the entrance or exit of the door frame.

2. The laser sensor for human body safety protection for use in a revolving door according to claim 1, **characterized in that** the laser scan area (3) is at one side of a door leaf and is at a distance from the door leaf, or penetrates through the door leaf of the revolving door and forms an angle with the door leaf.

3. The laser sensor for human body safety protection for use in a revolving door according to claim 1, **characterized in that** the approach of determining a working area (301) in step S1 comprises: forming the working area (301) according to a pre-set value, or forming the working area (301) by the following steps:
(1) performing laser scan within a maximum scan area range of the sensor (5) to form a pre-set scan area and to obtain a ground frame location;
(2) on the basis of the obtained ground frame location information, dividing the pre-set scan area into two parts by using a line between the sensor and the ground frame as a base line, wherein a side from the base line and facing a door leaf rotation shaft is the working area (301).

4. The laser sensor for human body safety protection for use in a revolving door according to claim 1, **characterized in that** the approach of forming the extension area (302) in step S2 comprises: on the basis of the working area (301), forming an area by rotating and extending a pre-set angle towards the door frame direction from the working area, said area being the extension area (302).

5. The laser sensor for human body safety protection for use in a revolving door according to claim 1, **characterized in that** the application analysis section comprises an installation position analyzing module, which is used for analyzing an installation orientation of the sensor.

6. The laser sensor for human body safety protection for use in a revolving door according to claim 1, **characterized in that** the application analysis section comprises a scan area resolution adjusting module, which is used for dividing the laser scan area into at least two working areas with different resolutions, among which the working area (3A) with a higher resolution is at a side near the door frame, while the working area (3B) with a lower resolution is at a side near the door leaf rotation shaft.

## Patentansprüche

1. Lasersensor (5) zum Schutz des menschlichen Körpers zur Verwendung in einer Drehtür, wobei der Lasersensor (5) umfasst:
- einen Laserabtastbereichsberechnungsabschnitt, der eine Laseremissionsvorrichtung, eine Laserablenkungsvorrichtung, eine optische Signalempfangsvorrichtung und eine Analyse- und Verarbeitungsvorrichtung umfasst, wobei die Laseremissionsvorrichtung Lasersignale an die Laserablenkungsvorrichtung sendet; die Laserablenkungsvorrichtung die Lasersignale unter der Steuerung der Analyse- und Verarbeitungsvorrichtung um einen vorgegebenen Winkel ablenkt und mindestens einen Laserabtastbereich (3) bildet; die optische Signalempfangsvorrichtung wird zum Empfangen von zurückgesendeten Lasersignalen und zum Übertragen dieser Signale an die Analyse- und Verarbeitungsvorrichtung verwendet; die Analyse- und Verarbeitungsvorrichtung umfasst ein Auslösepunktdistanzanalysemodul, das eine Analyse durchführt, um Auslösepunktdistanzinformationen gemäß den von der optischen Signalempfangsvorrichtung gesendeten Signalen zu erhalten;
- einen Anwendungsanalyseabschnitt, der ein Sicherheitsanalysemodul umfasst, das den Bewegungszustand der Drehtür durch eine Türsteuerungsvorrichtung steuert, nachdem es eine Analyse auf der Grundlage der Auslösepunktdistanzinformationen durchgeführt hat; und
- ein Sicherheitsanalysemodul, das eine Auslösepunkt-Gefahrenanalyse umfasst,
**dadurch gekennzeichnet, dass** die Auslösepunkt-Gefahrenanalyse umfasst:
- zuerst das Erhalten der Auslösepunktdistanzinformationen, die von dem Auslösepunktdistanzanalysemodul resultiert,
- dann das Vergleichen der Auslösepunktdistanzinformationen mit der Information über eine voreingestellte Distanz des Abtastpunkts,
- wenn die Auslösepunktdistanz größer oder gleich der voreingestellten Distanz des Abtastpunktes ist, ist der Auslösepunkt ein sicherer Auslösepunkt, und
- wenn die Auslösepunktdistanz kleiner ist als die voreingestellte Distanz des Abtastpunktes, ist der Auslösepunkt ein gefährlicher Auslösepunkt und ein entsprechendes Steuersignal wird erzeugt;
wobei der Anwendungsanalyseabschnitt ein Abtastbereich-Einstellmodul umfasst,
das Abtastbereich-Einstellmodul umfasst eine Abtastbereichssteuerungsanalyse, die die folgenden Schritte umfasst:
S1. Bestimmen eines Arbeitsbereichs (301);
S2. Bilden eines Erweiterungsbereichs (302);
S3. Einstellen des Laser-Abtastbereichs (3) auf der Grundlage der in den Schritten S1 und S2 erhaltenen Bereichsinformationen;
wobei der Ansatz zum Einstellen des Laser-Abtastbereichs (3) in Schritt S3 umfasst: Vergleichen der empfangenen Distanzinformationen mit den voreingestellten Auslöseinformationen, um eine Analyse und Bestimmung durchzuführen, und wenn sich der Türflügel innerhalb des Türrahmens befindet, ist der Laser-Abtastbereich (3) der Arbeitsbereich; wenn sich der Türflügel innerhalb des Eingangs- oder Ausgangsbereichs des Türrahmens befindet, ist der Laser-Abtastbereichs (3) eine Summe aus dem Arbeitsbereich (301) und dem Erweiterungsbereich (302), und wobei:
- der Ansatz zur Bestimmung der Türflügelposition darin besteht, dass: wenn der Sensor kontinuierlich Auslösesignale empfängt und die Distanz zwischen dem Auslösepunkt und dem Sensor innerhalb eines voreingestellten Bereichs der voreingestellten Werte für die Bodenrahmendistanz liegt, es dargestellt wird, dass sich der Türflügel innerhalb des Türrahmens befindet, wenn der Sensor keine Auslösesignale innerhalb des Bereichs der voreingestellten Werte für den Bodenrahmen empfangen kann, es dargestellt wird, dass sich der Türflügel innerhalb des Bereichs des Eingangs oder des Ausgangs des Türrahmens befindet, oder
- der Laserabtastbereich (3) einen Winkel mit dem Türflügel entlang einer senkrechten Richtung bildet und der Ansatz zur Bestimmung der Türflügelposition folgender ist: wenn der Sensor kontinuierlich Auslösesignale empfängt, die einer ersten voreingestellten Distanzänderungskurve entsprechen, bedeutet dies, dass der Türflügel von der Innenseite des Türrahmens in den Eingang oder Ausgang des Türrahmens eintritt; wenn der Sensor (5) kontinuierlich Auslösesignale empfängt, die einer zweiten voreingestellten Distanzänderungskurve entsprechen, bedeutet dies, dass der Türflügel vom Eingang oder Ausgang des Türrahmens in die Innenseite des Türrahmens eintritt.

2. Lasersensor zum Schutz des menschlichen Körpers zur Verwendung in einer Drehtür nach Anspruch 1, **dadurch gekennzeichnet, dass** sich der Laserabtastbereich (3) an einer Seite eines Türflügels befindet und vom Türflügel beabstandet ist oder durch den Türflügel der Drehtür durchdringt und einen Winkel mit dem Türflügel bildet.

3. Lasersensor zum Schutz des menschlichen Körpers zur Verwendung in einer Drehtür nach Anspruch 1, **dadurch gekennzeichnet, dass** der Ansatz zur Bestimmung eines Arbeitsbereichs (301) in Schritt S1 umfasst: Bilden des Arbeitsbereichs (301) gemäß einem voreingestellten Wert, oder Bilden des Arbeitsbereichs (301) durch die folgenden Schritte:
(1) Durchführen einer Laserabtastung innerhalb eines maximalen Abtastbereiches des Sensors (5), um einen voreingestellten Abtastbereich zu bilden und eine Bodenrahmenposition zu erhalten;
(2) auf der Grundlage der erhaltenen Informationen über die Bodenrahmenposition wird der voreingestellte Abtastbereich in zwei Teile geteilt, indem eine Linie zwischen dem Sensor und dem Bodenrahmen als Basislinie verwendet wird, wobei eine Seite, die von der Basislinie ausgeht und einer Türflügelrotationswelle gegenüberliegt, der Arbeitsbereich (301) ist.

4. Lasersensor für den Schutz des menschlichen Körpers zur Verwendung in einer Drehtür nach Anspruch 1, **dadurch gekennzeichnet, dass** der Ansatz zur Bildung des Erweiterungsbereichs (302) in Schritt S2 umfasst: auf der Grundlage des Arbeitsbereichs (301), Bilden eines Bereichs durch Drehen und Erweitern um einen voreingestellten Winkel in Richtung des Türrahmens aus dem Arbeitsbereich, wobei dieser Bereich der Erweiterungsbereich (302) ist.

5. Lasersensor zum Schutz des menschlichen Körpers zur Verwendung in einer Drehtür nach Anspruch 1, **dadurch gekennzeichnet, dass** der Anwendungsanalyseabschnitt ein Einbaupositionsanalysemodul umfasst, das zur Analyse der Einbauorientierung des Sensors verwendet wird.

6. Lasersensor zum Schutz des menschlichen Körpers zur Verwendung in einer Drehtür nach Anspruch 1, **dadurch gekennzeichnet, dass** der Anwendungsanalyseabschnitt ein Abtastbereichsauflösungseinstellungsmodul umfasst, das dazu dient, den Laserabtastbereich in mindestens zwei Arbeitsbereiche mit unterschiedlichen Auflösungen zu unterteilen, von denen sich der Arbeitsbereich (3A) mit einer höheren Auflösung auf einer Seite in der Nähe des Türrahmens befindet, während sich der Arbeitsbereich (3B) mit einer niedrigeren Auflösung auf einer Seite in der Nähe der Türflügelrotationswelle befindet.

## Revendications

1. Capteur laser (5) de protection de sécurité corporelle humaine à utiliser dans une porte tournante, le capteur laser (5) comprenant :
- une section de calcul de la portée du balayage laser comprenant un dispositif d'émission laser, un dispositif de déviation laser, un dispositif de réception de signaux optiques et un dispositif d'analyse et de traitement ; le dispositif d'émission laser transmettant des signaux laser au dispositif de déviation laser ; le dispositif de déviation laser déviant les signaux laser d'un angle prédéfini sous le contrôle du dispositif d'analyse et de traitement et formant au moins une zone de balayage laser (3) ; le dispositif de réception de signaux optiques étant utilisé pour recevoir les signaux laser renvoyés et transmettant lesdits signaux au dispositif d'analyse et de traitement ; le dispositif d'analyse et de traitement comprenant un module d'analyse de la distance du point de déclenchement, lequel effectue une analyse pour obtenir des informations sur la distance du point de déclenchement en fonction des signaux envoyés par le dispositif de réception de signaux optiques ;
- une section d'analyse d'application comprenant un module d'analyse de sécurité, qui contrôle l'état de mouvement de la porte tournante par l'intermédiaire d'un dispositif de commande de porte après avoir effectué une analyse sur la base des informations relatives à la distance du point de déclenchement ; et
- un module d'analyse de sécurité comprenant de procéder à une analyse de danger de point de déclenchement ; **caractérisé en ce que** ladite analyse de danger de point de déclenchement comprend les étapes suivantes :
- obtenir, en premier lieu, les informations sur la distance du point de déclenchement obtenues par le module d'analyse de la distance du point de déclenchement,
- comparer ensuite les informations sur la distance du point de déclenchement aux informations sur une distance prédéfinie du point de balayage,
- lorsque la distance du point de déclenchement est supérieure ou égale à la distance prédéfinie du point de balayage, le point de déclenchement est un point de déclenchement sûr, et
- lorsque la distance du point de déclenchement est inférieure à la distance prédéfinie du point de balayage, le point de déclenchement est un point de déclenchement dangereux et un signal de commande correspondant est généré ;
où la section d'analyse d'application comprend un module d'ajustement de la zone de balayage ; le module d'ajustement de la zone de balayage comprenant de procéder à une analyse de contrôle de la zone de balayage qui comprend les étapes suivantes :
S1. déterminer une zone de travail (301) ;
S2. former une zone d'extension (302) ;
S3. ajuster la portée de la zone de balayage laser (3) sur la base des informations de zone obtenues aux étapes S1 et S2 ;
où l'approche d'ajustement de la portée de la zone de balayage laser (3) à l'étape S3 comprend : la comparaison des informations de distance reçues aux informations de déclenchement prédéfinies pour effectuer une analyse et une détermination et, lorsque le vantail de la porte est à l'intérieur du cadre de la porte, la zone de balayage laser (3) est la zone de travail ; lorsque le vantail de la porte est dans la plage d'entrée ou de sortie du cadre de porte, la zone de balayage laser (3) est la somme de la zone de travail (301) et de la zone d'extension (302), et où :
- l'approche de détermination de l'emplacement du vantail de porte est la suivante : lorsque le capteur reçoit en continu des signaux de déclenchement et lorsque la distance entre le point de déclenchement et le capteur se situe dans une plage prédéfinie des valeurs prédéfinies de la distance du cadre au sol, le vantail de porte est considéré comme étant à l'intérieur du cadre de porte ; lorsque le capteur ne peut pas recevoir de signaux de déclenchement dans la plage des valeurs prédéfinies du cadre au sol, le vantail de porte est considéré comme étant dans la plage de l'entrée ou de la sortie du cadre de porte ; ou
- la zone de balayage laser (3) forme un angle avec le vantail de porte le long d'une direction perpendiculaire, et l'approche de détermination de l'emplacement du vantail de la porte est la suivante : lorsque le capteur reçoit en continu des signaux de déclenchement conformes à une première courbe de variation de distance prédéfinie, le vantail de la porte est considéré comme entrant dans l'entrée ou la sortie du cadre de porte depuis l'intérieur du cadre de porte ; lorsque le capteur (5) reçoit en continu des signaux de déclenchement conformes à une deuxième courbe de variation de distance prédéfinie, le vantail de la porte est considéré comme entrant dans l'intérieur du cadre de la porte depuis l'entrée ou la sortie du cadre de la porte.

2. Capteur laser de protection de sécurité corporelle humaine à utiliser dans une porte tournante selon la revendication 1, **caractérisé en ce que** la zone de balayage laser (3) se situe sur un côté d'un vantail de porte et à une certaine distance du vantail de porte, ou pénètre à travers le vantail de porte de la porte tournante et forme un angle avec le vantail de porte.

3. Capteur laser de protection de sécurité corporelle humaine à utiliser dans une porte tournante selon la revendication 1, **caractérisé en ce que** l'approche de détermination d'une zone de travail (301) à l'étape S1 comprend : la formation de la zone de travail (301) selon une valeur prédéfinie, ou la formation de la zone de travail (301) par les étapes suivantes :
(1) effectuer un balayage laser dans une zone de balayage maximale du capteur (5) pour former une zone de balayage prédéfinie et obtenir un emplacement de cadre au sol ;
(2) sur la base des informations obtenues sur l'emplacement du cadre au sol, diviser la zone de balayage prédéfinie en deux parties en utilisant une ligne entre le capteur et le cadre au sol comme ligne de base, un côté de la ligne de base faisant face à l'arbre de rotation du vantail de porte étant la zone de travail (301) .

4. Capteur laser de protection de sécurité corporelle humaine à utiliser dans une porte tournante selon la revendication 1, **caractérisé en ce que** l'approche de formation de la zone d'extension (302) à l'étape S2 comprend l'étape suivante : sur la base de la zone de travail (301), former une zone par rotation et extension d'un angle prédéfini vers la direction du cadre de la porte à partir de la zone de travail, ladite zone étant la zone d'extension (302).

5. Capteur laser de protection de sécurité corporelle humaine à utiliser dans une porte tournante selon la revendication 1, **caractérisé en ce que** la section d'analyse d'application comprend un module d'analyse de la position d'installation, qui est utilisé pour analyser l'orientation d'installation du capteur.

6. Capteur laser de protection de sécurité corporelle humaine à utiliser dans une porte tournante selon la revendication 1, **caractérisé en ce que** la section d'analyse d'application comprend un module d'ajustement de la résolution de la zone de balayage, qui est utilisé pour diviser la zone de balayage laser en au moins deux zones de travail ayant des résolutions différentes, parmi lesquelles la zone de travail (3A) ayant une résolution plus élevée se trouve sur un côté proche du cadre de la porte, tandis que la zone de travail (3B) ayant une résolution plus faible se trouve sur un côté proche de l'arbre de rotation du vantail de porte.
